# EUROPEAN PATENT APPLICATION

(11) **EP 1 411 518 A1**
(43) Date of publication of application: **21.04.2004**
(21) Application number: 03705063.0
(22) Date of filing: 12.02.2003
(51) Int. Cl.: G11B 20/12, G11B 20/10, H04N 5/91

(54) **RECORDING APPARATUS, RECORDING METHOD, PROGRAM, AND RECORDING MEDIUM**

(30) Priority: 13.02.2002 JP 2002034942
(71) Applicant: Matsushita Electric Industrial Co., Ltd., Kadoma-shi, Osaka 571-8501 (JP)
(72) Inventor: ITOH, Masanori, Moriguchi-shi, Osaka 570-0096 (JP)
(74) Representative: Grünecker, Kinkeldey, Stockmair & Schwanhäusser Anwaltssozietät
(86) International application number: PCT/JP2003/001415
(87) International publication number: WO 2003/069617

(57) **Abstract**

There are cases where a delay in data reproduction occurs, for example, when a still image file is reproduced.

A recording and reproducing apparatus provided with a recording portion 103, a recording control portion 108, a reproduction control portion 109 and a pickup 111 detecting a defective ECC block where an error occurs that is associated with writing of a file onto an optical disk 110 which writing is performed with an ECC block as a recording unit, determining the position of an alternate ECC block corresponding to the detected ECC block in consideration of the position of the detected ECC block, and rewriting, into the alternate ECC block whose position is determined, data written in the defective ECC block corresponding to the alternate ECC block.

## Description

### TECHNICAL FIELD

The present invention relates to a recording apparatus, a recording method, a program, and a recording medium usable for movie and digital still cameras and the like of recording, for example, still image data and sound data onto a recording medium such as an optical disk.

### BACKGROUND ART

In rewritable optical disks recording still image files such as JPEG files and TIFF files, the actual data of one file normally comprises a plurality of logical blocks. Here, the actual data is a data part other than the management information of the file system such as the file name and the recording position information.

A predetermined number of continuous logical blocks are stored physically in one ECC (error correction code) block.

For example, in a DVD-RAM of 4.7 GB, when files are managed by a UDF (universal disk format) file system, logical blocks each comprise 2 KB, and sixteen continuous logical blocks are stored in one ECC block.

In recording data files, data is read out immediately after being written, thereby verifying whether the data is correctly written or not.

When the occurrence of a recording error is recognized by a defective ECC block being detected, alternate processing is performed. Here, the alternate processing is to avoid a recording error by rewriting the data into an alternate ECC block where there is no recording error.

Alternate ECC blocks are preset collectively in an alternate ECC block area of the optical disk.

For example, in a DVD-RAM of 4.7 GB, such an alternate ECC block area is an area on the inner radius side of the optical disk.

When a defective ECC block is detected, one ECC block in the collectively set alternate ECC block area is used as the alternate block.

The alternate ECC block used as the alternate block is accessed by use of a logical block number the same as the logical block number in the detected defective ECC block.

Therefore, for example, in a DVD-RAM of 4.7 GB, ECC blocks constituting the actual data of one still image file include inner radius side ECC blocks as many as the defective ECC blocks even when the logical block numbers are continuous.

However, in reproducing a still image file recorded on the above-described conventional optical disk, when there is a defective ECC block, it is necessary to first perform a seek to the ECC block used as the alternate block and then return to the neighborhood of the defective ECC block to continue the reproduction processing.

For this reason, it is unavoidable that a delay occurs in data reproduction processing.

For example, when the worst seek time of the optical disk is one second, a delay of as long as a maximum of two seconds on both ways can occur in data reproduction processing.

Such a delay in data reproduction processing causes a delay in the completion of drawing, a data writing error and the like at the time of still image reproduction.

As described above, there has been a problem that a delay in data reproduction processing occurs, for example, when a still image file is reproduced.

### DISCLOSURE OF INVENTION

In view of the above-mentioned problem of the prior art, an object of the present invention is to provide a recording apparatus, a recording method, a program, and a recording medium capable of suppressing a delay in data reproduction processing, for example, when a still image file is reproduced.

A first invention of the present invention is a recording apparatus comprising:
error recording block detecting means (108, 111) of detecting an error recording block where an error occurs that is associated with writing of a file onto a recording medium (110), said writing being performed with a predetermined recording block as a recording unit;
alternate recording block position determining means (108) of determining a position of an alternate recording block corresponding to the detected error recording block in consideration of a position of said detected error recording block; and
rewriting means (103, 108, 111) of rewriting, into the alternate recording block whose position is determined, data written in the error recording block corresponding to the alternate recording block.

A second invention of the present invention is a recording apparatus according to the first invention of the present invention, wherein said alternate recording block position determining means (108) determines, after the whole of said file is written, the position of the alternate recording block as a position having a predetermined relationship with a position of the file the whole of which is written.

A third invention of the present invention is a recording apparatus according to the first invention of the present invention, wherein said alternate recording block position determining means (108) determines, as a position having a predetermined relationship with the position of the detected error recording block, the position of said alternate recording block corresponding to the error recording block.

A fourth invention of the present invention is a recording apparatus according to the third invention of the present invention, wherein said alternate recording block position determining means (108) determines, after the whole of the file is written, the position of the alternate recording block corresponding to said error recording block.

A fifth invention of the present invention is a recording apparatus according to the third invention of the present invention, wherein said alternate recording block position determining means (108) determines the position of said alternate recording block every time a predetermined number of recording blocks of said file are written.

A sixth invention of the present invention is a recording apparatus according to the first invention of the present invention, wherein said alternate recording block position determining means (108) determines, when a plurality of said error recording blocks is detected, the position of the alternate recording block so that positions of a plurality of alternate recording blocks corresponding to the plurality of the error recording blocks are physically substantially continuous.

A seventh invention of the present invention is a recording method comprising:
an error recording block detecting step of detecting an error recording block where an error occurs that is associated with writing of a file onto a recording medium (110), said writing being performed with a predetermined recording block as a recording unit;
an alternate recording block position determining step of determining a position of an alternate recording block corresponding to the detected error recording block in consideration of a position of said detected error recording block; and
a rewriting step of rewriting, into the alternate recording block whose position is determined, data written in the error recording block corresponding to the alternate recording block.

An eighth invention of the present invention is a program of causing a computer to execute the following steps of the recording method according to the seventh invention of the present invention: the error recording block detecting step of detecting an error recording block where an error occurs that is associated with writing of a file onto a recording medium (110), said writing being performed with a predetermined recording block as a recording unit; the alternate recording block position determining step of determining a position of an alternate recording block corresponding to the detected error recording block in consideration of a position of said detected error recording block; and the rewriting step of rewriting, into the alternate recording block whose position is determined, data written in the error recording block corresponding to the alternate recording block.

A ninth invention of the present invention is a recording medium holding the program according to the eighth invention of the present invention, said medium being processable by a computer.

Next, aspects of the invention invented by the inventor of the present application will be shown.

A first aspect of the invention is a reproducing apparatus comprising reading means (107, 109, 111) of reading out a file from a recording medium (110) in which (1) an error recording block is detected where an error occurs that is associated with writing of the file performed with a predetermined recording block as a recording unit, (2) the position of an alternate recording block corresponding to the detected error recording block is determined in consideration of the position of the detected error recording block, and (3) data written in the error recording block corresponding to the alternate recording block is rewritten into the alternate recording block whose position is determined.

A second aspect of the invention is the reproducing apparatus of the first aspect of the invention wherein when reading out the data from the alternate recording block, the reading means (107, 109, 111) reads out data also from a recording block different from the alternate recording block.

A third aspect of the invention is the reproducing apparatus of the second aspect of the invention wherein when a plurality of error recording blocks is detected, the position of the alternate recording block is determined so that the positions of a plurality of alternate recording blocks corresponding to the error recording blocks are physically substantially continuous, and
the different recording block is a single or a plurality of alternate recording blocks among the alternate recording blocks whose positions are determined so as to be physically substantially continuous.

A fourth aspect of the invention is a reproducing method comprising a reading step of reading out a file from a recording medium (110) in which (1) an error recording block is detected where an error occurs that is associated with writing of the file performed with a predetermined recording block as a recording unit, (2) the position of an alternate recording block corresponding to the detected error recording block is determined in consideration of the position of the detected error recording block, and (3) data written in the error recording block corresponding to the alternate recording block is rewritten into the alternate recording block whose position is determined.

A fifth aspect of the invention is a program of causing a computer to execute the reading step, of the reproducing method of the fourth aspect of the invention, of reading out a file from a recording medium (110) in which (1) an error recording block is detected where an error occurs that is associated with writing of the file performed with a predetermined recording block as a recording unit, (2) the position of an alternate recording block corresponding to the detected error recording block is determined in consideration of the position of the detected error recording block, and (3) data written in the error recording block corresponding to the alternate recording block is rewritten into the alternate recording block whose position is determined.

A sixth aspect of the invention is a recording medium holding the program of the fifth aspect of the invention and being computer-readable.

A seventh aspect of the invention is a recording medium (110) in which (1) an error recording block is detected where an error occurs that is associated with writing of a file performed with a predetermined recording block as a recording unit, (2) the position of an alternate recording block corresponding to the detected error recording block is determined in consideration of the position of the detected error recording block, and (3) data written in the error recording block corresponding to the alternate recording block is rewritten into the alternate recording block whose position is determined.

### BRIEF DESCRIPTION OF DRAWINGS

FIG. 1 is a block diagram showing the structure of an image recording and reproducing apparatus according to a first embodiment of the present invention;
FIG. 2 is an explanatory view showing the physical data disposition of a JPEG file according to the first embodiment of the present invention;
FIG. 3 is an explanatory view showing the physical data disposition of a JPEG file according to a second embodiment of the present invention;
FIG. 4 is a flowchart of an alternate recording operation of the image recording and reproducing apparatus of the first embodiment of the present invention; and
FIG. 5 is an explanatory view showing the physical data disposition of a JPEG file according to another embodiment of the present invention.

### (Explanation of Reference Numerals)

- 100: Image signal input portion
- 101: JPEG compression portion
- 102: JPEG header composition portion
- 103: Recording portion
- 104: Image display portion
- 105: JPEG decompression portion
- 106: JPEG header analysis portion
- 107: Reproduction portion
- 108: Recording control portion
- 109: Reproduction control portion
- 110: Optical disk
- 111: Pickup

### BEST MODE FOR CARRYING OUT THE INVENTION

Hereinafter, embodiments of the present invention will be described with reference to the drawings.

### (First embodiment)

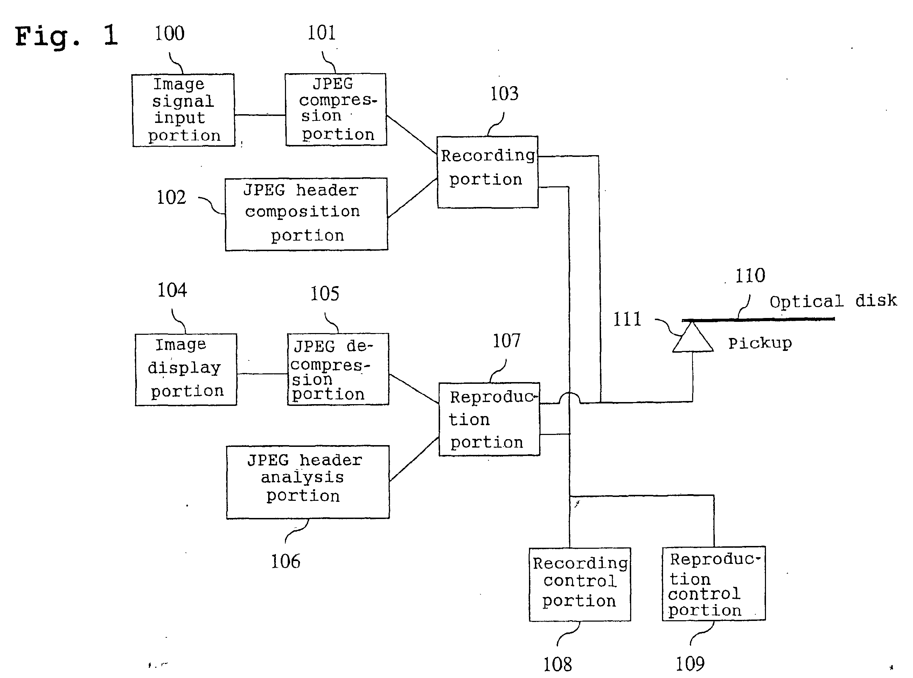

First, referring to FIG. 1 which is a block diagram showing the structure of an image recording and reproducing apparatus according to a first embodiment of the present invention, the structure of the image recording and reproducing apparatus of the embodiment will be described.

The physical data disposition of a JPEG file which is a characteristic of the present embodiment will be described later.

In the present embodiment, on an optical disk 110, files are managed by a UDF file system, and the following description will be given with a file management method of the UDF file system as a premise. Here, the data size of logical blocks is 2 KB, the data size of ECC blocks is 32 KB, and the ECC blocks are recording units in writing and the like in the present embodiment.

A recording control portion 108 is means of, when a shutter button (not shown) is depressed, performing a control to cause a JPEG compression portion 101 to JPEG-compress a still image generated by an image input portion 100, and record the still image onto an optical disk 110 through a recording portion 103 and a pickup 111.

A JPEG header composition portion 102 is means of generating a JPEG file header and recording it onto the optical disk 110.

The recording control portion 108 is means of recording file management information so that the JPEG-compressed data and the JPEG file header are treated as one JPEG file.

A reproduction control portion 109 is means of performing a control to read out JPEG files from the optical disk 110 through the pickup 111 and a reproduction portion 107.

A JPEG header analysis portion 106 is means of successively analyzing the pieces of information included in the JPEG header from the first one.

A JPEG decompression portion 105 is means of decompressing a still image from the compressed data part by use of the result of the analysis.

An image display portion 104 is means of displaying the still image decompressed from the compressed data part.

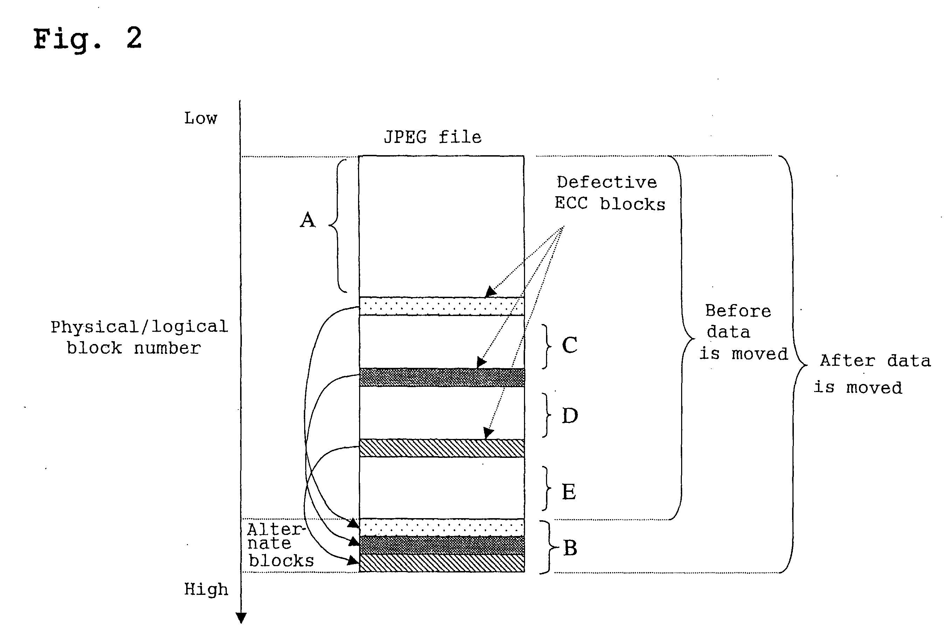

Now, the physical data disposition of a JPEG file which is a characteristic of the present embodiment will be described with reference to FIG. 2 which is an explanatory view showing the physical data disposition of a JPEG file according to the first embodiment of the present invention.

An alternate ECC block of a defective ECC block detected by performing verification after the JPEG file is written is recorded just behind an ECC block where the tail of the JPEG file is recorded.

In FIG. 2, alternate ECC blocks of three defective ECC blocks are recorded so as to be continuous in the area B on the optical disk 110.

The data recorded in the areas A, C, D and E are data where no recording error is detected at the time of verification.

It is to be noted that when no recording error is detected at the time of verification, the alternate processing is not necessary and the movement of the ECC block recording position is not performed, either.

The predetermined recording block of the present invention corresponds to the ECC block of the present embodiment, the error recording block of the present invention corresponds to the defective ECC block of the present embodiment, and the alternate recording block of the present invention corresponds to the alternate ECC block of the present embodiment.

The error recording block detecting means of the present invention corresponds to means including the recording control portion 108, the reproduction control portion 109 and the pickup 111, the alternate recording block position determining means of the present invention corresponds to means including the recording control portion 108, and the rewriting means of the present invention corresponds to means including the recording portion 103, the recording control portion 108 and the pickup 111. The reading means of the invention corresponds to means including the reproduction portion 107, the reproduction control portion 109 and the pickup 111. Means including the recording apparatus of the present invention and the reproducing apparatus of the invention corresponds to the image recording and reproducing apparatus of the present embodiment.

The recording medium of the present invention corresponds to the optical disk 110.

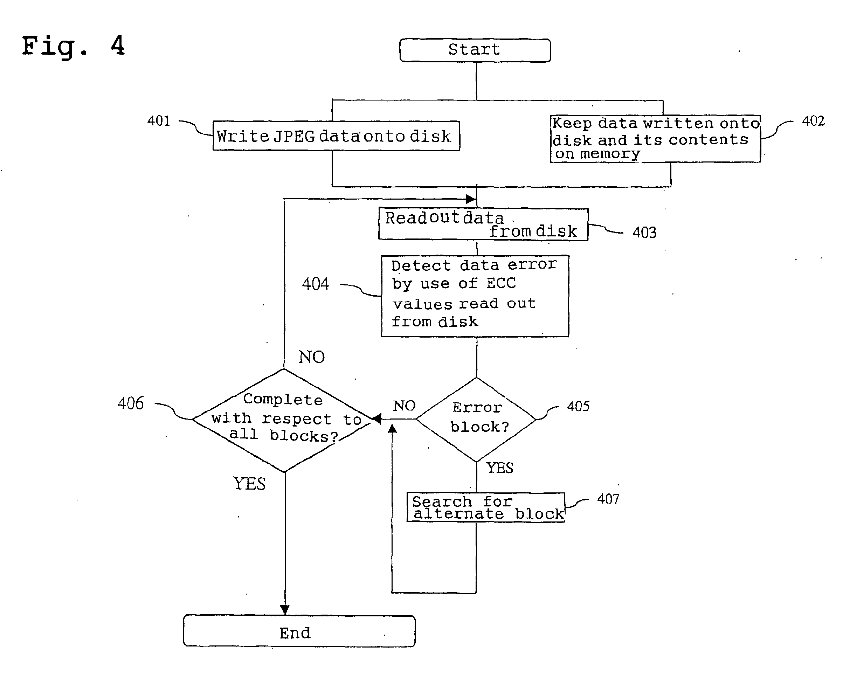

Next, referring to FIG. 4 which is a flowchart of the alternate recording operation of the image recording and reproducing apparatus of the first embodiment of the present invention, an operation of the image recording and reproducing apparatus of the present embodiment will be described.

An embodiment of the recording method of the present invention and the reproducing method of the invention will also be described while the operation of the image recording and reproducing apparatus of the present embodiment is described (the same applies to other embodiments).

Hereinafter, the alternate recording operation of the recording control portion 108 which is a characteristic of the present embodiment will be mainly described.

Steps 401 and 402: The recording control portion 108 performs a control to temporarily write the whole of the JPEG-compressed data onto the optical disk 110 (step 401) and at the same time, keep the written data on a memory of the recording portion 103 (step 402).

Steps 403 and 404: The recording control portion 108 performs a control to read out all of the written data and the ECC values added to the ECC block units immediately after data recording (step 403) , and detects the presence or absence of an error by use of a comparison between ECC values calculated from the data read out after the writing and the ECC values being read out (step 404).

Steps 405 to 407: The recording control portion 108 performs a control to determine whether the ECC block on which error detection processing is performed is a defective ECC block or not (step 405).

When it is determined that the ECC block on which error detection processing is performed is not a defective ECC block, the recording control portion 108 performs a control to perform similar verification on all the ECC blocks being written (step 406).

When it is determined that the ECC block on which error detection processing is performed is a defective ECC block, the recording control portion 108 performs a control to search for an alternate ECC block and record the corresponding data kept on the memory into the found alternate ECC block (step 407).

More specifically, as shown in FIG. 2, when a data error is detected by use of the ECC values, data of one ECC block kept on the memory is written in an ECC block in the area B as the alternate block. For example, when unrecoverable data errors are detected in three ECC blocks, data of a total of three ECC blocks is written into the area B.

The ECC blocks used as the alternate written blocks are provided with logical block numbers different from those of the original ECC blocks, and are treated as one data file by an allocation descriptor.

By the alternate blocks being just behind the tail of the file as described above, the pickup can be moved in 1/3 to 1/2 the worst seek time. For example, when the worst seek time is one second, the pickup can be moved in approximately 0.3 to 0.5 second.

By performing recording in this manner, the seek time to the alternate ECC blocks at the time of reproduction can be significantly reduced while recording errors are eliminated, so that a delay in display processing at the time of reproduction can be prevented.

Moreover, since verification is performed on each ECC block at the time of recording, even when a recording error occurs due to an influence of dust, dirt or the like adhering during recording, the error can be immediately avoided. This enables, for example, the reliability of recording of image files such as still images to be increased to that of general data files.

Moreover, by the alternate ECC blocks being continuous in the area B, the reproduction control portion 109 (see FIG. 1) can read the alternate blocks at a time, so that the number of seeks to the alternate blocks can be reduced from three to one.

It is to be noted that the same applies to the time of seeks from the alternate blocks to the original blocks.

While in the present embodiment, the alternate ECC blocks are in the area B adjoining the area E (see FIG. 2) at the tail of a JPEG file, it is to be noted that even if the alternate ECC blocks are somewhat away from the tail of a JPEG file, this produces no serious ill effect on the seek operation at the time of reproduction.

For example, while the alternate ECC blocks are ECC blocks just behind the tail of a JPEG file in the present embodiment, when the ECC blocks just behind the tail are already used for writing of other files, the physically nearest ones of the unused ECC blocks may be used.

By using unused ECC blocks as alternate ECC blocks, alternate recording destinations as near as possible can be secured without recorded recording units being moved.

It is to be noted that when the ECC block which becomes a candidate of the alternate block first is also a defective ECC block, an ECC block which becomes the next candidate of the alternate block may be used as the alternate ECC block.

While in the present embodiment, the alternate ECC blocks are in an area adjoining behind the area E (see FIG. 2) and having a higher logical block number, they may be in an area in front of the area A (see FIG. 2) and having a lower logical block number.

### (Second embodiment)

First, the structure of an image recording and reproducing apparatus of the present embodiment will be described.

The structure of the image recording and reproducing apparatus of the present embodiment is similar to that of the above-described first embodiment.

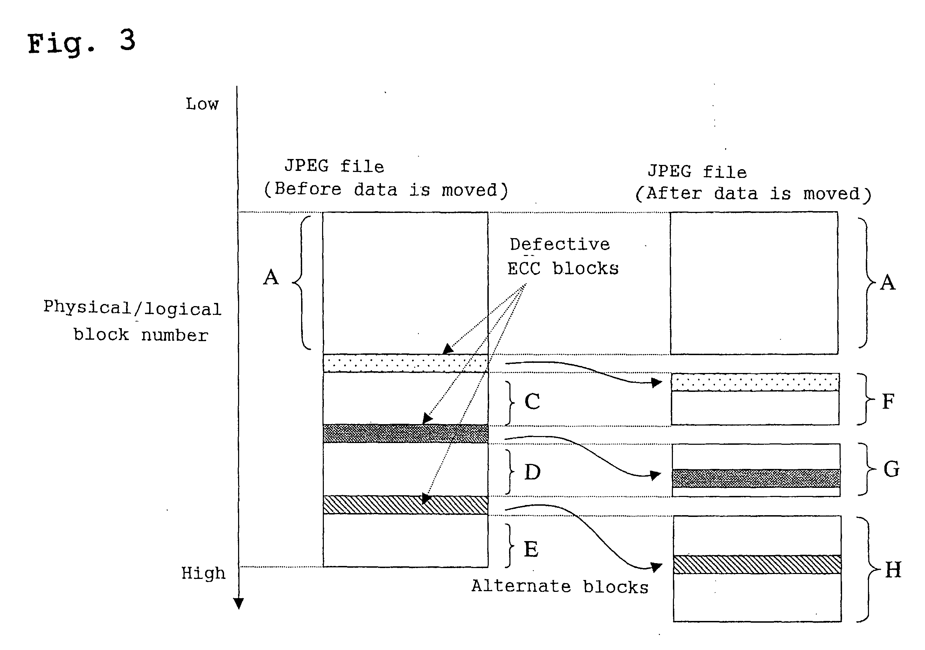

Accordingly, referring mainly to FIG. 3 which is an explanatory view showing the physical data disposition of a JPEG file according to the second embodiment of the present invention, the physical disposition of alternate ECC blocks in which a characteristic of the present embodiment shows up, and the structure of logical blocks will be described.

In FIG. 3, the left side shows a condition before data is moved, and the right side shows a condition after, avoiding defective ECC blocks, data is moved after verification.

In the present embodiment, not only the data corresponding to the position of the defective ECC block is moved to the next ECC block by avoiding the defective ECC block but also the data of the area C corresponding to the position of the ECC block succeeding the defective ECC block is shifted and recorded into the block succeeding the alternate ECC block.

It is to be noted that the data succeeding the second defective ECC block and the data succeeding the third defective ECC block in the JPEG file are similarly shifted and recorded.

That is, the alternate block of the first defective ECC block in the JPEG file is disposed in the first ECC block of the area F. The second defective ECC block is disposed in an alternate ECC block in the area G. The third defective ECC block is disposed in an alternative ECC block in the area H.

Therefore, the numbers of the logical blocks constituting the JPEG file monotonously increase even after the data is moved.

Next, an operation of the image recording and reproducing apparatus of the present embodiment will be described.

The whole of the JPEG-compressed data is temporarily written onto the optical disk, and at the same time, kept on the memory.

The written data and the ECC values are all read out immediately after data recording, and a data error is detected by use of the ECC data value added to the ECC block unit (32 KB).

When a data error is detected, the data of one ECC block kept on the memory is written in the first ECC block of the area F (see FIG. 3) as the alternate ECC block.

This alternate ECC block is provided with a logical block number higher by the number corresponding to one ECC block (that is, 16) than the logical block number of the original ECC block.

That is, this alternate ECC block is provided with a logical block number corresponding to the ECC block next to the defective ECC block.

Then, the data in the area C is shifted and recorded into ECC blocks succeeding the alternate ECC block.

Consequently, the data in the area C is shifted and recorded into the area F and the area G.

The data succeeding the second and the third defective ECC blocks is also shifted and recorded avoiding the defective ECC blocks.

Although the JPEG file is divided into the areas A, F, G and H by the above-described processing, it is treated as one data file by the UDF allocation descriptor.

By performing recording in this manner, the seek operation to the alternate ECC blocks at the time of reproduction can be significantly reduced while recording errors are eliminated, so that a delay in display processing at the time of reproduction can be prevented.

In the present embodiment, although time for shifting the recording units succeeding the alternate recording designation is necessary, a block nearer to the recording unit where the recording error occurs can be used as the alternate recording destination.

Moreover, since verification is performed on each ECC block at the time of recording, even when a recording error occurs due to an influence of dust, dirt or the like adhering during recording, the error can be immediately avoided. This enables, for example, the reliability of recording of data files such as still images to be increased to that of data files.

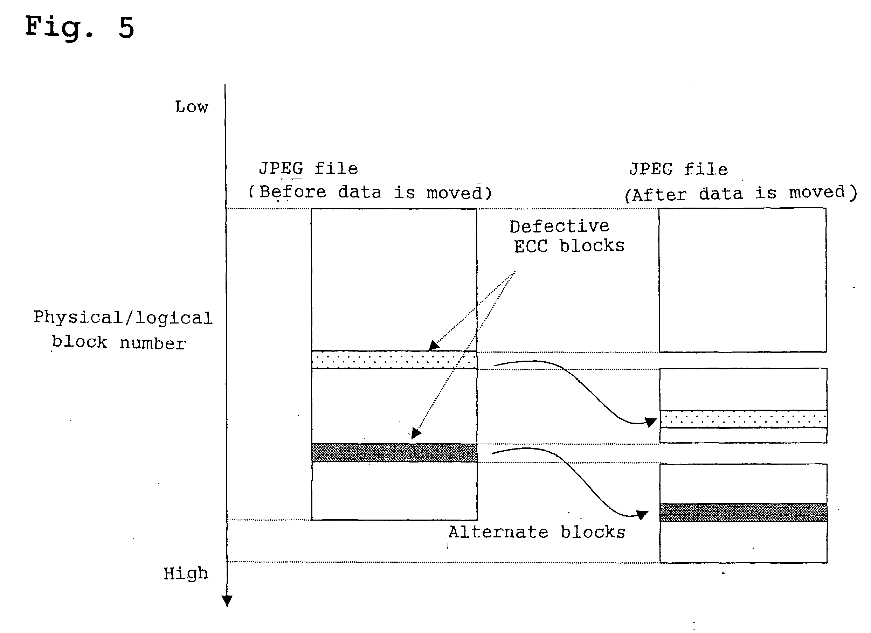

While in the present embodiment, the alternate ECC blocks are ECC blocks next to the defective ECC blocks, they may be ECC blocks that are somewhat away as shown in FIG. 5 which is an explanatory view showing the physical data disposition of a JPEG file according to another embodiment of the present invention.

It is to be noted that when the ECC block which becomes a candidate of the alternate block first is also a defective ECC block, an ECC block which becomes the next candidate of the alternate block may be used as the alternate ECC block.

The first and the second embodiments are described above in detail.

① While the file of the present invention is a JPEG file in the above-described first and second embodiments, the present invention is not limited thereto. It may be a still image file such as a TIFF file, a sound file such as a WAV file, and a moving image file such as an ASF file.

That is, a different data format may be used when the rate of generation of the data to be recorded is lower than the rate of writing onto the optical disk to the extent that there is sufficient time to perform verification at the time of data recording and when it is possible to perform recording onto the optical disk at time intervals.

② While the recording medium of the present invention is the optical disk 110 in the above-described first and second embodiments, the present invention is not limited thereto. It may be an optical disk such as a DVD-RAM, an MO (magneto-optical) disk, a DVD-R, a DVD-RW, a DVD+RW, a CD-R or a CD-RW and a recording medium having a disk shape such as a hard disk.

It is to be noted that, while the reading and writing head for reading and writing from and onto the recording medium of the present invention is the pickup in the above-described first and second embodiments, it is a pickup and a magnetic head when the recording medium is an MO, and it is a magnetic head when the recording medium is a hard disk.

③ While the determination of the position of the alternate recording block of the present invention is performed after the whole of the JPEG file is temporarily recorded in the above-described first and second embodiments, the present invention is not limited thereto. It may be performed at a plurality of times in combination with writing.

For example, the determination of the position of the alternate recording block of the present invention may be performed according to a method that verification is performed after recording of ten ECC blocks and this is repeated.

In summary, the position of the alternate recording block of the present invention may be (1) determined as a position having a predetermined relationship with the position of the file the whole of which is written (for example, the position of an unused block at the head or the tail of the file the whole of which is written) after the whole of the file is written, or (2) determined as a position having a predetermined relationship with the position of the detected error recording block (for example, the position of an unused block that is the nearest to the detected error recording block) after the whole of the file is written or every time a predetermined number of recording blocks of the file are written.

④ While the detection of the error recording block of the present invention is performed by use of the ECC values being read out in the above-described first and second embodiments, the present invention is not limited thereto. It may be performed by comparing the data kept on the memory directly with the data being read out.

⑤ While the alternate recording block of the present invention is the ECC block that is physically as near as possible in the above-described first and second embodiments, the present invention is not limited thereto. It may be an ECC block where the seek time is shortest at the time of reading,

For example, when an optical disk having a double spiral structure is used and when the time required for a movement to an ECC block of a different spiral that is physically the nearest to a certain spiral is longer than the time required for a movement to an ECC block of the same spiral that is slightly far away, a movement to an ECC block of a different spiral which movement requires a shorter time may be performed.

⑥ Defective ECC blocks may be registered in a list in order that data is never again recorded into ECC blocks where a recording error is detected.

That is, it may be performed that data is never again recorded into the ECC blocks included in the list of defective ECC blocks.

By using such a list, unnecessary writing processing can be reduced more.

⑦ The program of the present invention is a program of causing a computer to execute operations of all or some of the steps (or processes, operations, workings or the like) of the above-described recording method of the present invention and reproducing method of the present invention, said program operating in concert with the computer.

The recording medium of the present invention is a recording medium holding a program of causing a computer to execute all or some of the operations of all or some of the steps (or processes, operations, workings or the like) of the above-described recording method of the present invention and reproducing method of the present invention, said recording medium being computer-readable and said program that is read out performing the operations in concert with the computer.

Moreover, the above-mentioned "some of the steps (or processes, operations, workings or the like)" of the present invention means one or some steps of the more than one steps.

Moreover, the above-mentioned "steps (or processes, operations, workings or the like) " of the present invention means all or some operations of the steps.

Moreover, a usage of the program of the present invention may be such that the program is recorded on a computer-readable recording medium and operates in concert with a computer.

Moreover, a usage of the program of the present invention may be such that the program is transmitted over a transmission medium, is read out by a computer and operates in concert with the computer.

Moreover, the recording medium includes ROMs, and the transmission medium includes: transmission media such as the Internet; light; radio waves; and sound waves.

Moreover, the above-mentioned computer of the present invention is not limited to pure hardware such as a CPU, but may include firmware, an OS, and peripherals.

As described above, the structure of the present invention may be implemented either via software or via hardware.

### INDUSTRIAL APPLICABILITY

The present invention offers an advantage that a delay in data reproduction processing, for example, when a still image file is reproduced can be suppressed.

## Claims

1. A recording apparatus comprising:
error recording block detecting means of detecting an error recording block where an error occurs that is associated with writing of a file onto a recording medium, said writing being performed with a predetermined recording block as a recording unit;
alternate recording block position determining means of determining a position of an alternate recording block corresponding to the detected error recording block in consideration of a position of said detected error recording block; and
rewriting means of rewriting, into the alternate recording block whose position is determined, data written in the error recording block corresponding to the alternate recording block.

2. A recording apparatus according to claim 1, wherein said alternate recording block position determining means determines, after the whole of said file is written, the position of the alternate recording block as a position having a predetermined relationship with a position of the file the whole of which is written.

3. A recording apparatus according to claim 1, wherein said alternate recording block position determining means determines, as a position having a predetermined relationship with the position of the detected error recording block, the position of said alternate recording block corresponding to the error recording block.

4. A recording apparatus according to claim 3, wherein said alternate recording block position determining means determines, after the whole of the file is written, the position of the alternate recording block corresponding to said error recording block.

5. A recording apparatus according to claim 3, wherein said alternate recording block position determining means determines the position of said alternate recording block every time a predetermined number of recording blocks of said file are written.

6. A recording apparatus according to claim 1, wherein said alternate recording block position determining means determines, when a plurality of said error recording blocks is detected, the position of the alternate recording block so that positions of a plurality of alternate recording blocks corresponding to the plurality of the error recording blocks are physically substantially continuous.

7. A recording method comprising:
an error recording block detecting step of detecting an error recording block where an error occurs that is associated with writing of a file onto a recording medium, said writing being performed with a predetermined recording block as a recording unit;
an alternate recording block position determining step of determining a position of an alternate recording block corresponding to the detected error recording block in consideration of a position of said detected error recording block; and
a rewriting step of rewriting, into the alternate recording block whose position is determined, data written in the error recording block corresponding to the alternate recording block.

8. A program of causing a computer to execute the following steps of the recording method according to claim 7: the error recording block detecting step of detecting an error recording block where an error occurs that is associated with writing of a file onto a recording medium, said writing being performed with a predetermined recording block as a recording unit; the alternate recording block position determining step of determining a position of an alternate recording block corresponding to the detected error recording block in consideration of a position of said detected error recording block; and the rewriting step of rewriting, into the alternate recording block whose position is determined, data written in the error recording block corresponding to the alternate recording block.

9. A recording medium holding the program according to claim 8, said medium being processable by a computer.
